# EUROPEAN PATENT APPLICATION

(11) **EP 2 998 271 A1**
(43) Date of publication of application: **23.03.2016**
(21) Application number: 14798287.0
(22) Date of filing: 15.05.2014
(51) Int. Cl.: C01B 31/04, C08K 3/04, C08L 29/14, C08L 61/04, C08L 63/00, C08L 101/00

(54) **FLAKY GRAPHITE CONTAINING BORON AND PRODUCTION METHOD THEREFOR**

(30) Priority: 15.05.2013 JP 2013102777
(71) Applicant: Showa Denko K.K., Tokyo 105-8518 (JP)
(72) Inventor: FUKUYO, Tomoyuki, Minato-ku, Tokyo 105-8518 (JP); KAMATA, Hirotoshi, Minato-ku, Tokyo 105-8518 (JP)
(74) Representative: Strehl Schübel-Hopf & Partner
(86) International application number: PCT/JP2014/062979
(87) International publication number: WO 2014/185496

(57) **Abstract**

There is provided a flaky graphite containing boron, the flaky graphite containing boron having an average thickness of 100 nm or less and an average plate diameter d_{c} of 0.01 to 100 µm. There is also provided a conductive resin composition comprising a resin component and a carbon component comprising at least the flaky graphite containing boron, wherein the content of the carbon component based on 100 parts by mass of the resin component is 5 to 4000 parts by mass. There are also provided a conductive coating material and a conductive adhesive using the conductive resin composition.

## Description

### Technical Field

The present invention relates to a flaky graphite containing boron, a production method therefor, a conductive resin composition comprising the flaky graphite containing boron, and a conductive coating material and a conductive adhesive using the conductive resin composition.

### Background Art

In recent years, conductive coating materials, conductive adhesives, and the like using a conductive resin composition have been increasing from the point of view of weight saving of products, consideration to environment, and production cost suppression. The conductive coating materials are, for example, screen printed onto a base film and widely used as a membrane circuit forming a keyboard, a switch, and the like. Further, the conductive adhesives are used as a substitute for solder. The conductive resin composition used for these applications is produced, for example, by dissolving a resin as a binder or a matrix material in a solvent to form a varnish and dispersing a conductive material in the varnish.

In the conductive resin composition, a metal such as gold, silver, platinum, or palladium is used as a filler (conductive material) for imparting conductivity. However, when a metal is used as a conductive material, problems will occur, such as occurrence of dendrites under a high-humidity condition, reduction of reliability as a conductive resin composition due to corrosion, reduction of conductivity due to oxidation of a metal surface, and increase in production cost.

A conductive resin composition using a carbon-based conductive material has been investigated for the purpose of solving these problems.

For example, PTL1 describes a conductive composition comprising vapor-grown carbon fibers, carbon black, and a thermoplastic resin and/or a thermosetting resin.

Further, PTL2 describes a conductive composition in which a carbonaceous material for conductive compositions comprising vapor-grown carbon fibers having a specific structure and graphite particles and/or amorphous carbon particles is blended with a resin component.

### Citation List

### Patent Literature

PTL 1: Japanese Patent Laid-Open No. 6-122785
PTL 2: Japanese Patent Laid-Open No. 2004-221071

### Summary of Invention

### Technical Problem

The conductive resin compositions described in PTL1 and PTL2 are stable to oxidation and corrosion, and the cost can be suppressed to a low level as compared with the case where a metal-based conductive material is used. However, since a carbon-based conductive material has low dispersibility in a resin and low stability after the dispersion, a conductive resin composition using the carbon-based conductive material tends to be reduced in conductivity, heat resistance, water resistance, and adhesion with a base material. Therefore, an improvement in these properties is desired.

In view of the above problems, an object of the present invention is to provide a flaky graphite containing boron and a production method therefor which can achieve a conductive resin composition excellent in conductivity, heat resistance, water resistance, and adhesion with a base material.

Another object of the present invention is to provide a conductive coating material and a conductive adhesive each comprising the conductive resin composition.

### Solution to Problem

The present invention is as described below.
[1] A flaky graphite containing boron, the flaky graphite containing boron having an average thickness of 100 nm or less and an average plate diameter d_{c} of 0.01 to 100 µm.
[2] The flaky graphite containing boron according to [1], the flaky graphite containing boron having an average thickness of 100 nm or less and an average plate diameter d_{c} of 1 to 100 µm and comprising two or more layers of graphene sheets, wherein an average interplanar spacing d₀₀₂ by wide-angle X-ray diffraction is 0.337 nm or less, and an intensity ratio [D/G] of D-band to G-band in a laser-Raman spectrum is 0.8 to 1.5.
[3] A method for producing a flaky graphite containing boron, the method comprising heat-treating a flaky graphite having an average thickness of 100 nm or less and an average plate diameter d_{c} of 0.01 to 100 µm in the presence of one or two or more selected from boron and a boron compound.
[4] A conductive resin composition comprising a resin component and a carbon component comprising at least the flaky graphite containing boron according to [1] or [2], wherein the content of the carbon component based on 100 parts by mass of the resin component is 5 to 4000 parts by mass.
[5] The conductive resin composition according to [4], wherein the resin component comprises 10 to 100% by mass of polyvinyl acetal.
[6] The conductive resin composition according to [5], wherein the polyvinyl acetal is polyvinyl butyral.
[7] The conductive resin composition according to any one of [4] to [6], further comprising a solvent.
[8] The conductive resin composition according to any one of [4] to [7], wherein the resin component further comprises a curable resin.
[9] The conductive resin composition according to [8], wherein the curable resin is one or two or more selected from a phenolic resin and an epoxy resin.
[10] The conductive resin composition according to any one of [4] to [9], wherein the content of the carbon component based on 100 parts by mass of the resin component is 5 to 1000 parts by mass.
[11] The conductive resin composition according to any one of [4] to [10], wherein the carbon component further comprises a carbon nanotube.
[12] A conductive coating material comprising the conductive resin composition according to any one of [4] to [11].
[13] A conductive adhesive comprising the conductive resin composition according to any one of [4] to [11].

### Advantageous Effects of Invention

The present invention can provide a flaky graphite containing boron and a production method therefor which can achieve a conductive resin composition excellent in conductivity, heat resistance, water resistance, and adhesion with a base material.

Further, the present invention can provide a conductive coating material and a conductive adhesive each comprising the conductive resin composition.

### Brief Description of Drawings

[Fig. 1] Fig. 1 is a view showing the relationship between the bulk density and the resistivity of a flaky graphite used in Examples and Comparative Examples.
[Fig. 2] Fig. 2 is a view showing the relationship between the bulk density and the resistivity of a carbon nanotube used in Examples.

### Description of Embodiments

### [Flaky Graphite Containing Boron]

The flaky graphite containing boron has an average thickness of 100 nm or less and an average plate diameter d_{c} of 0.01 to 100 µm and contains boron. Note that the flaky graphite containing boron has an average thickness that exceeds the thickness of one carbon atom.

When the average thickness is 100 nm or less, the resistivity of the flaky graphite containing boron will be reduced. Therefore, conductive paths will be easily formed in a conductive resin composition, and the conductivity of the conductive resin composition in which the flaky graphite containing boron is blended will be improved. The flaky graphite containing boron preferably has a single-layer sheet structure to a structure in which about 300 layers of graphene sheets are laminated, more preferably a structure in which two layers to about 300 layers of graphene sheets are laminated.

Further, when the average plate diameter d_{c} is 0.01 µm or more, dispersion in a resin will be improved, and if it exceeds 100 µm, mixing of a conductive resin composition will be difficult.

Note that the "average thickness" in the present specification refers to, for example, a value calculated from a specific surface area measured by a nitrogen adsorption BET method using a theoretical density of graphite, assuming graphite to be plate-shaped and ignoring edges.

Further, the "average plate diameter d_{c}" refers to a value obtained by measuring the maximum diameter of each of 100 samples of flaky graphite selected at random with a scanning electron microscope or a transmission electron microscope and determining the arithmetic average of these measured values.

From the point of view of improving conductivity and improving conformability of flaky graphite with a resin, the average thickness is preferably 0.5 nm or more, more preferably 1.0 nm or more, further preferably 2 nm or more, further more preferably 5 nm or more, and further more preferably 10 nm or more.

Further, from the point of view of improving conductivity, improving the formability of conductive paths in the conductive resin composition, and improving conformability of flaky graphite with a resin, the average thickness is preferably 80 nm or less, more preferably 70 nm or less, more preferably 60 nm or less, more preferably 50 nm or less, further preferably 40 nm or less, and further more preferably 30 nm or less.

From the point of view of improving conductivity, improving the formability of conductive paths in the conductive resin composition, and improving conformability of flaky graphite with a resin, the average plate diameter d_{c} is preferably 0.1 to 100 µm, more preferably 0.5 to 80 µm, further preferably 0.5 to 50 µm, and further more preferably 1 to 30 µm.

The ratio of the average plate diameter to the average thickness of flaky graphite is generally 5 to 10000.

The boron in the flaky graphite containing boron may adhere to the surface of flaky graphite as a boron element or a boron compound or may be in a state where it is replaced by a carbon atom in a graphite crystal. When the boron is in a state where it is replaced by a carbon atom in a graphite crystal, the conductivity of the flaky graphite containing boron and the conformability of the flaky graphite with a resin tend to be improved. Examples of the boron compound adhering to the surface of flaky graphite include B₄C, B₂O₃, and BN.

The content of boron in the flaky graphite containing boron is preferably 0.1 to 20% by mass, more preferably 0.5 to 10% by mass, further preferably 0.5 to 5% by mass. The content of the boron is preferably 0.1% by mass or more because the conformability of the flaky graphite containing boron with a resin is improved, and the content of the boron is preferably 0.1% by mass or more and 20% by mass or less because the conductivity of the flaky graphite containing boron is improved. The content of boron in the flaky graphite containing boron can be determined by subjecting a sample pretreated according to JIS R 7223 to ICP-atomic emission spectrometry.

Note that the content of boron is the total amount of the boron element and boron compound adhering to the surface of flaky graphite and the boron replaced by a carbon atom in a graphite crystal.

When the flaky graphite containing boron has an average thickness of 100 nm or less and an average plate diameter d_{c} of 1 to 100 µm and comprises two or more layers of graphene sheets, the flaky graphite containing boron preferably has an average interplanar spacing d₀₀₂ by wide-angle X-ray diffraction of 0.337 nm or less. When the average interplanar spacing d₀₀₂ is 0.337 nm or less, the flaky graphite tends to be excellent in conductivity because the flaky graphite has a high graphitization degree. The average interplanar spacing d₀₀₂ is preferably 0.336 nm or less from the point of view of improving conductivity.

Note that the smaller the average interplanar spacing d₀₀₂ is, the more the conductivity is improved, but it is difficult to achieve an average interplanar spacing d₀₀₂ of less than 0.334 nm. Therefore, the average interplanar spacing d₀₀₂ is generally preferably 0.334 nm or more.

In the present specification, the average interplanar spacing by wide-angle X-ray diffraction refers to a value measured by the Gakushin method established through the round robin test by the 117th committee of the Japan Society for the Promotion of Science. The details of the Gakushin method are described in "Carbon", [No. 36], pp. 25-34 (1963) or the like.

Further, in the case where the average interplanar spacing d₀₀₂ is 0.337 nm or less, the intensity (peak height) ratio [D/G] of the D-band which is a peak around 1300 cm⁻¹ to the G-band which is a peak around 1600 cm⁻¹ when the peaks are fitted with a Lorentzian function, in a laser-Raman spectrum at an excitation laser wavelength of 785 nm, is preferably 0.8 to 1.5.

The intensity ratio [D/G] is correlated with the crystallinity of graphite, and when the average interplanar spacing d₀₀₂ which is similarly correlated with the crystallinity of graphite is 0.337 nm or less, the intensity ratio [D/G] will generally be less than 0.8. However, when a carbon atom in the crystal lattice of graphite is replaced by a boron atom, the [D/G] will be in the range of 0.8 to 1.5 depending on the degree of replacement. That is, when the average interplanar spacing d₀₀₂ is 0.337 nm or less and the intensity ratio [D/G] is within the above range, it is shown that a part of the carbon atoms in the graphite crystal is replaced by boron. Thus, the effects as described above can be obtained.

The intensity ratio [D/G] is preferably 0.8 to 1.3, more preferably 0.8 to 1.1, from the point of view of improving conductivity and improving conformability of flaky graphite with a resin.

The flaky graphite containing boron can be produced, for example, by a production method of the present invention to be described below.

### [Method for Producing Flaky Graphite Containing Boron]

The method for producing flaky graphite containing boron is a method of heat-treating a flaky graphite having an average thickness of 100 nm and an average plate diameter d_{c} of 0.01 to 100 µm in the presence of one or two or more selected from a boron element (hereinafter also referred to as "boron") and a boron compound. Note that the flaky graphite as a raw material has an average thickness that exceeds the thickness of one carbon atom.

Examples of the method of heat treatment in the presence of one or two or more selected from boron and a boron compound include a method of contacting flaky graphite with boron or the like at a high temperature of 1,600 to 3,000°C in an inert gas atmosphere.

Examples of the inert gas include helium gas, argon gas, and nitrogen gas, and among these, argon gas is preferred since it is particularly stable under high temperatures.

Particularly, the temperature at which the treatment of "contacting" is performed is preferably 2,000 to 2,900°C, more preferably 2,300 to 2,900°C, from the point of view of improving the conductivity of the flaky graphite containing boron.

The time of heat treatment is preferably 10 minutes or more after flaky graphite reaches a predetermined temperature from the point of view of sufficiently proceeding the reaction between graphite and boron. The treatment time may be long, but generally, it is preferably 10 hours or less from the point of view of preventing reduction of the yield due to sublimation of graphite and suppressing a production cost.

The heat treatment under the above conditions improves the crystallinity (graphitization degree) of the flaky graphite containing boron and improves the conductivity of the flaky graphite containing boron.

Examples of the boron compound include boron oxides (such as B₂O₂, B₂O₃, B₄O₃ and B₄O₅), boron oxoacids (such as orthoboric acid, metaboric acid, and tetraboric acid) and salts thereof, boron carbides (such as B₄C and B₆C), boron nitrides (BN), and other boron compounds. Among these compounds, boron carbides such as B₄C and B₆C are preferred.

In the production method, the at least one selected from the group consisting of boron and a boron compound may be directly added to or mixed with the flaky graphite, or a vapor generated by heating the at least one selected from the group consisting of boron and a boron compound may be contacted with the flaky graphite.

The amount added of the at least one selected from the group consisting of boron and a boron compound is preferably 1 to 20 parts by mass, more preferably 1 to 10 parts by mass, further preferably 1 to 8 parts by mass, based on 100 parts by mass of the flaky graphite serving as a raw material.

The at least one selected from the group consisting of boron and a boron compound may be volatilized and lost through the process of heat treatment. Therefore, the above amount added is not necessarily equal to the amount of boron in the final flaky graphite containing boron.

By the heat treatment using the at least one selected from the group consisting of boron and a boron compound, boron is incorporated into the flaky graphite, improving the conformability to a dispersion medium or a resin and improving dispersibility. Further, since the boron or the boron compound acts as a catalyst of graphitization, the graphitization degree of the flaky graphite containing boron increases, and the conductivity is improved.

The flaky graphite containing boron may be subjected to acid treatment with nitric acid, sulfuric acid, hydrochloric acid, or a mixed acid thereof, or may be subjected to surface oxidization by heat treatment in the presence of air, from the point of view of improving the wettability to a resin and the dispersibility to a resin.

Further, the flaky graphite containing boron may also be subjected to dry grinding such as grinding using a Henschel mixer and jet milling or to wet cracking in which ultrasonic treatment is performed by adding a solvent. The flaky graphite containing boron is cracked by being subjected to grinding or cracking, and the dispersibility to a resin can be improved.

### [Conductive Resin Composition]

The conductive resin composition comprises a carbon component comprising at least the flaky graphite containing boron in an amount of 5 to 4000 parts by mass based on 100 parts by mass of a common resin component.

The resin component preferably comprises 10 to 100% by mass of polyvinyl acetal, and preferred examples of specific resin components include the following.

### <Resin Component>

### (Polyvinyl Acetal (A))

The polyvinyl acetal (A) is an acetalized resin obtained by reacting polyvinyl alcohol with an aldehyde compound. Examples thereof include polyvinyl formal derived from formaldehyde and polyvinyl butyral derived from butyraldehyde, and among these, polyvinyl butyral is preferred.

Since the polyvinyl acetal (A) has a property of improving the dispersibility of a carbon component, the conductivity of the conductive resin composition is improved.

An aldehyde compound having 1 to 6 carbon atoms is preferred as an aldehyde compound serving as a raw material of the polyvinyl acetal (A). From the point of view of improving the solubility in an organic solvent and improving the dispersibility of a carbon component, an aldehyde compound having 2 to 5 carbon atoms is more preferred, and butyraldehyde having 4 carbon atoms is further preferred. These polyvinyl acetals may be used singly or by mixing two or more thereof.

Polyvinyl butyral is preferred as the polyvinyl acetal (A) from the point of view of the dispersibility of a carbon component and the solubility in a solvent. The butyralization degree of the polyvinyl butyral is preferably 50 to 95 mol%, more preferably 60 to 90 mol%, further preferably 65 to 85 mol%.

Note that when a polyvinyl acetal resin is a polyvinyl butyral resin, the above butyralization degree can be calculated from the result measured by a method according to JIS K6728 "A polyvinyl butyral test method".

Examples of the commercially available products of the polyvinyl butyral include S-LEC manufactured by Sekisui Chemical Co., Ltd., such as product numbers "BL-1", "BL-2", "BL-2H", "BL-5", "BL-10", "BM-1", "BM-2", "BM-S", "BH-3", and "BH-S".

### (Curable Resin (B))

The resin component preferably further comprises a curable resin (B).

Examples of the curable resin (B) include a phenolic resin, an epoxy resin, a urethane resin, an acryl urethane resin, a silicone resin, a polyimide resin, a polyimide silicone resin, a diallyl phthalate (DAP) resin, an unsaturated polyester resin, a vinyl ester resin, and an oxetane resin. The curable resin (B) is preferably at least one of a phenolic resin and an epoxy resin which are excellent in compatibility with a polyvinyl acetal resin.

Note that glass transition temperature is higher to improve heat resistance in the case where the curable resin (B) comprises only an epoxy resin than in the case where the curable resin (B) comprises a phenolic resin and an epoxy resin. Thus, the former case is more preferred than the latter case.

The polyvinyl acetal (A) contributes to the development of good dispersibility of a carbon nanotube in a resin composition, while the curable resin (B) contributes to the development of good heat resistance, strength, adhesiveness, and the like when the curable resin (B) is converted to a cured product.

### [Phenolic Resin (B-1)]

Examples of phenolic resins include resol-type phenolic resins which can be obtained by reacting aldehydes with phenols using a basic catalyst, novolac-type phenolic resins which can be obtained by reacting aldehydes with phenols using an acid catalyst, and mixtures thereof.

Examples of phenols used for the synthesis of phenolic resins include alkylphenols such as phenol, various butylphenols, various cresols, and various xylenols, various phenylphenols, various methoxyphenols, 1,3-dihydroxybenzene, bisphenol A, and bisphenol F. Among these phenols, phenol is preferred. Here, "various" means various structural isomers.

Examples of aldehydes include formaldehyde, paraformaldehyde, furfural, acetaldehyde, and benzaldehyde. Among these aldehydes, formaldehyde and paraformaldehyde are preferred.

The phenols and aldehydes may be used singly or by mixing two or more thereof.

A modified resol-type phenolic resin having at least one of a carboxyl group and a glycidyl group in the molecule may be used as the phenolic resin. There is no limitation in a modification method, and a known method can be employed. Examples include a method of reacting at least one of a carboxyl group-containing compound and a glycidyl group-containing compound with a part of methylol groups in a phenolic resin to modify the phenolic resin.

The weight average molecular weight of the phenolic resin (B-1) is preferably 300 to 30,000, more preferably 700 to 20,000, more preferably 1,000 to 19,000, further preferably 3,000 to 18,000, and further more preferably 5,000 to 17,000, from the point of view of the wettability with and the workability for various materials. Note that, in the present specification, the weight average molecular weight refers to a value measured by gel permeation chromatography as a molecular weight (Mw) in terms of standard polystyrene.

Examples of commercially available phenolic resins include "Shonol (registered trademark) BKS-3823A" (resol type), "Shonol BRG-556" (novolac type), and "Shonol BRN595" (novolac type) all manufactured by Showa Denko K.K., and "Hitanol (registered trademark)" manufactured by Hitachi Chemical Co., Ltd.

Note that when a novolac-type phenolic resin is used, a curing agent is commonly used to cure the resin, and when a resol-type phenolic resin is used, a curing agent needs not be used. Further, the curing agent may be used in combination with a compound having a functional group that reacts with a phenolic hydroxyl group, for example, an epoxy resin.

### [Epoxy Resin (B-2)]

An epoxy resin is a resin that contains two or more oxirane groups in one molecule.

Examples of the epoxy resin include epoxy resins of glycidyl ethers, glycidyl amines, and glycidyl esters, and alicyclic epoxy resins, and among these, epoxy resins of glycidyl ethers and glycidyl amines are preferred. Epoxy resins may be used singly or in combination of two or more.

Examples of the epoxy resins of glycidyl ethers include bisphenol glycidyl ether, dihydroxybiphenyl glycidyl ether, dihydroxybenzene glycidyl ether, nitrogen-containing cyclic glycidyl ether, dihydroxynaphthalene glycidyl ether, phenol-formaldehyde polyglycidyl ether, and polyhydroxyphenol polyglycidyl ether.

Specific examples of the bisphenol glycidyl ether include bisphenol A glycidyl ether, bisphenol F glycidyl ether, bisphenol AD glycidyl ether, bisphenol S glycidyl ether, and tetramethyl bisphenol A glycidyl ether.

Specific examples of the dihydroxybiphenyl glycidyl ether include 4,4'-biphenyl glycidyl ether, 3,3'-dimethyl-4,4'-biphenyl glycidyl ether, and 3,3',5,5'-tetramethyl-4,4'-biphenyl glycidyl ether.

Specific examples of the dihydroxybenzene glycidyl ether include resorcin glycidyl ether, hydroquinone glycidyl ether, and isobutylhydroquinone glycidyl ether.

Specific examples of the nitrogen-containing cyclic glycidyl ether include triglycidyl isocyanurate and triglycidyl cyanurate.

Specific examples of the dihydroxynaphthalene glycidyl ether include 1,6-dihydroxynaphthalene glycidyl ether and 2,6-dihydroxynaphthalene glycidyl ether.

Specific examples of the phenol-formaldehyde polyglycidyl ether include phenol-formaldehyde polyglycidyl ether and cresol-formaldehyde polyglycidyl ether.

Specific examples of polyhydroxyphenol polyglycidyl ether include tris(4-hydroxyphenyl)methane polyglycidyl ether, tris(4-hydroxyphenyl)ethane polyglycidyl ether, tris(4-hydroxyphenyl)propane polyglycidyl ether, tris(4-hydroxyphenyl)butane polyglycidyl ether, tris(3-methyl-4-hydroxyphenyl)methane polyglycidyl ether, tris(3,5-dimethyl-4-hydroxy)methane polyglycidyl ether, tetrakis(4-hydroxyphenyl)ethane polyglycidyl ether, tetrakis(3,5-dimethyl-4-hydroxyphenyl)ethane polyglycidyl ether, and dicyclopentene-phenol-formaldehyde polyglycidyl ether.

Examples of the epoxy resins of glycidyl amines include N,N,N',N'-tetraglycidyl-4,4'-diaminodiphenylmethane and triglycidyl-p-aminophenol.

Examples of the epoxy resins of glycidyl esters include diglycidyl phthalate and diglycidyl isophthalate.

Examples of the alicyclic epoxy resins include epoxy-cyclohexane derivatives, and specific examples include the CELLOXIDE (trade name) series manufactured by Daicel Chemical Industries, Ltd.

The epoxy resin can be cured in the presence of a curing catalyst. Examples of the curing catalyst include compounds having an action of promoting the polymerization of epoxy groups, such as tertiary amine-based compounds and imidazole compounds.

Specific examples of the tertiary amine-based compounds include triethylamine, dimethylcyclohexylamine, N,N-dimethylpiperazine, benzyldimethylamine, 2-(N,N-dimethylaminomethyl)phenol, 2,4,6-tris(N,N-dimethylaminomethyl)phenol, and 1,8-diazabiscyclo(5.4.0)undecene-1.

Specific examples of imidazole-based compounds include 2-methylimidazole, 2-ethyl-4-methylimidazole, 2-phenylimidazole, 2-undecylimidazole, 1-cyanoethyl-2-methylimidazole, 1-cyanoethyl-2-phenylimidazole, 1-cyanoethyl-2-undecylimidazole, 1-cyanoethyl-2-methylimidazole trimellitate, 1-cyanoethyl-2-undecylimidazolium trimellitate, 2,4-diamino-6-[2'-methylimidazolyl-(1')]-ethyl-s-triazine, 2,4-diamino-6-[2'-undecylimidazolyl-(1')]-ethyl-s-triazine, a 2-methylimidazole/isocyanuric acid adduct, a 2-phenylimidazole/isocyanuric acid adduct, and a 2,4-diamino-6-[2'-methylimidazolyl-(1')]-ethyl-s-triazine/isocyanuric acid adduct.

Further, a compound (curing agent) having a functional group that reacts with an epoxy group can be used for the curing of an epoxy resin in addition to the curing catalyst. Examples of the curing agent include a compound having a functional group to be added to an epoxy group, such as a phenol compound and an acid anhydride compound. Note that when the phenolic resin (B-1) is used in combination, the phenolic resin acts also as a curing agent.

Specific examples of the phenol-based compound as a curing agent include bisphenol F, bisphenol A, bisphenol S, 2,6-dihydroxynaphthalene, and the above novolac-type phenolic resins.

Examples of the acid anhydride-based compound as a curing agent include itaconic anhydride, dodecenyl succinic anhydride, tetrahydrophthalic anhydride, methyltetrahydrophthalic anhydride, hexahydrophthalic anhydride, methylhexahydrophthalic anhydride, endomethylenetetrahydrophthalic anhydride, methylendomethylenetetrahydrophthalic anhydride, chlorendic anhydride, trimellitic anhydride, pyromellitic anhydride, benzophenonetetracarboxylic anhydride, ethylene glycol bis(anhydrotrimellitate), glycerol tris(anhydrotrimellitate), polyazelaic anhydride, polydodecanedioic anhydride, and 7,12-dimethyl-7,11-octadecadiene-1,18-dicarboxylic partial anhydride.

### <Content of Each Component>

The content of polyvinyl acetal (A) in the resin component is preferably 10 to 100% by mass, more preferably 10 to 80% by mass, further preferably 10 to 70% by mass, further preferably 10 to 60% by mass, and further preferably 10 to 55% by mass.

When the content of the polyvinyl acetal (A) in the resin component is 10% by mass or more, the dispersibility of a carbon component will be improved.

When the curable resin (B) comprises any one of the phenolic resin (B-1) and the epoxy resin (B-2), the content of the phenolic resin or the epoxy resin in the resin component is preferably 40 to 90% by mass, more preferably 50 to 85% by mass, further preferably 50 to 80% by mass. When the content of the resin is 40% by mass or more, heat resistance will be improved, and when the content of the resin is 90% by mass or less, the dispersibility of a carbon component will be satisfactory.

The total content of the polyvinyl acetal (A) and the phenolic resin (B-1) or the epoxy resin (B-2) is preferably 80 to 100% by mass, more preferably 85 to 100% by mass, further preferably 90 to 100% by mass, in the resin component.

When the curable resin (B) comprises both the phenolic resin (B-1) and the epoxy resin (B-2), the content of the phenolic resin (B-1) in the resin component is preferably 10 to 60% by mass, more preferably 15 to 55% by mass, further preferably 25 to 55% by mass. When the content of the phenolic resin is within the above range, curability will be sufficient, and heat resistance will be improved.

When the curable resin (B) comprises both the phenolic resin (B-1) and the epoxy resin (B-2), the content of the epoxy resin (B-2) in the resin component is preferably 10 to 60% by mass, more preferably 15 to 55% by mass, further preferably 15 to 35% by mass. When the content of the epoxy resin is within the above range, curability will be sufficient, and heat resistance will also be satisfactory.

When the curable resin (B) comprises both the phenolic resin (B-1) and the epoxy resin (B-2), the content of the phenolic resin (B-1) and the epoxy resin (B-2) in the three components of the component (A), the component (B-1), and the component (B-2) is preferably 70 to 90% by mass, more preferably 75% by mass to 80% by mass.

The conductive resin composition may comprise other thermoplastic resins in addition to the polyvinyl acetal (A) and the curable resin (B). One or two or more resins selected from polyester resins, acrylic resins, and polystyrene resins can be used as other thermoplastic resins.

Further, the thermoplastic resins may be thermoplastic elastomers, and examples of the thermoplastic elastomers include styrenic thermoplastic elastomers, such as hydrogenated styrene-butadiene rubber, a styrene-ethylene/butylene-styrene block copolymer, and a styrene-ethylene/propylene-styrene block copolymer; olefinic thermoplastic elastomers, such as a polymer alloy of polypropylene and ethylene propylene rubber and a polymer alloy of polypropylene and ethylene propylene diene rubber; and vinyl chloride-based thermoplastic elastomers.

The conductive resin composition may comprise the above other thermoplastic resins in the range where the effect of the present invention is not impaired, and specifically, the content is preferably 20% by mass or less, more preferably 15% by mass or less, further preferably 10% by mass or less, and the conductive resin composition may not necessarily comprise the above other thermoplastic resins.

### <Carbon Component>

The conductive resin composition comprises a carbon component comprising at least the flaky graphite containing boron (C) in an amount of 5 to 4000 parts by mass based on 100 parts by mass of the resin component.

If the content of the carbon component is less than 5 parts by mass based on 100 parts by mass of the resin component, sufficient conductivity cannot be obtained, and if the content is more than 4000 parts by mass, the conformability of the carbon component with the resin component will be reduced. The content of the carbon component based on 100 parts by mass of the resin component is preferably 5 to 1000 parts by mass, more preferably 5 to 400 parts by mass, further preferably 10 to 300 parts by mass, from the point of view of improving conductivity and improving the conformability of the carbon component with the resin component.

The content of the flaky graphite containing boron (C) in the carbon component is preferably 25 to 100% by mass, more preferably 50 to 100% by mass, more preferably 60 to 100% by mass, and further preferably 70 to 95% by mass. When the content of the flaky graphite containing boron (C) is 25% by mass or more, the effect of incorporating the flaky graphite containing boron (C) can be easily obtained.

The conductive resin composition comprises at least the flaky graphite containing boron (C), but may comprise a carbon component other than the flaky graphite containing boron (C). For example, a carbon nanotube (D) is preferred as a carbon component other than the flaky graphite containing boron.

### (Carbon nanotube (D))

When the conductive resin composition comprises the carbon nanotube (D), the conductivity of the conductive resin composition itself, a cured product thereof, or a dry film thereof can be improved. This seems to be because the carbon nanotubes (D) connect a plurality of the flaky graphite containing boron (C) to form conductive paths.

The carbon nanotube (D) has an aspect ratio (ratio of the fiber length to the fiber diameter) of preferably 10 to 15,000, more preferably 20 to 1,000, further preferably 30 to 500.

When the aspect ratio is within the above range, the conductive paths are easily formed in a matrix to improve conductivity and improve the dispersibility in the resin component.

The average fiber diameter d_{D} of the carbon nanotube is preferably 5 to 300 nm, more preferably 5 to 250 nm, further preferably 10 to 200 nm. When the average fiber diameter is within the above range, the carbon nanotube will be easily dispersed in the resin component, and a conductive resin composition having excellent conductivity can be obtained.

Note that, although there is no particular limitation in the method of determining the average fiber diameter, the average fiber diameter can be determined, for example, by selecting 200 samples of carbon nanotubes at random using a scanning electron microscope (SEM), measuring the fiber diameter of each sample, and calculating the average. Similarly, the aspect ratio can also be determined by selecting 200 samples of carbon nanotubes using a scanning electron microscope (SEM), calculating the average fiber diameter and the average fiber length, and calculating the aspect ratio from these values.

The content of the carbon nanotube (D) based on 100 parts by mass of the resin component is preferably 2 to 70 parts by mass, more preferably 2 to 65 parts by mass, further preferably 2 to 60 parts by mass, and further more preferably 3 to 50 parts by mass. When the content of the carbon nanotube (D) is within the above range, the dispersibility of the filler will be improved, and sufficient conductivity can be obtained.

Note that examples of the commercially available products of the carbon nanotube (D) include "VGCF (registered trademark)-X", "VGCF (registered trademark)", and "VGCF (registered trademark)-H", all manufactured by Showa Denko K.K., and "NT-5" and "NT-7" both manufactured by Hodogaya Chemical Co., Ltd.

One specific type of the carbon nanotubes may be used singly, but it is preferred to mix and use two types of carbon nanotubes that satisfy the above aspect ratio and average fiber diameter. When two types of carbon nanotubes are used, it is preferred that the average fiber diameters d_{D1} and d_{D2} satisfy the relationship of 1.5 x d_{D1} ≤ d_{D2}.

That is, if only a carbon nanotube having a small average fiber diameter which has low dispersibility in a resin component is used, it will be difficult to uniformly disperse the carbon nanotube, and it may be unable to develop high conductivity. However, conduction paths in the resin can be easily secured by using two types of carbon nanotubes that satisfy the above relationship.

The difference between the average fiber diameter d_{D2} and the average fiber diameter d_{D1} is preferably 10 nm or more, more preferably 20 nm or more, further preferably 30 nm or more, from the point of view of improving conductivity.

The carbon nanotube is preferably a cylindrical graphene sheet which is produced by a chemical vapor deposition method (CVD method), an arc discharge method, or the like and in which carbon atoms are arranged regularly in the shape of hexagons.

Note that, in the present specification, a graphene sheet cylinder which is composed of one layer and has a diameter of one to several nm and a length of about one to several µm is referred to as a single-walled carbon nanotube, and a graphene sheet cylinder which is composed of a plurality of concentrically stacked layers and has a diameter of several nm to one hundred and tens of nm is referred to as a multi-walled carbon nanotube. Further, a generally conical graphene sheet is referred to as a carbon nanohorn, which includes a single-walled carbon nanohorn and a multi-walled carbon nanohorn. In the present invention, these are collectively referred to as a carbon nanotube. Examples of the method for producing a carbon nanotube include, but are not particularly limited to, an arc discharge method, a vapor growth method, and a laser ablation method.

The carbon nanotube is preferably a vapor-grown carbon fiber produced by a vapor growth method, and is more preferably a rigid fiber having a linear fibrous form and an average bending index of 5 to 15. The bending index shows the rigidity of a vapor-grown carbon fiber and is defined by Lx/D from the length (Lx) of the linear part that is not bent and the diameter (D) of a plurality of vapor-grown carbon fibers photographed by a microscope or the like. Therefore, it is shown that a vapor-grown carbon fiber having a small bending index is bent at a short spacing, and a vapor-grown carbon fiber having a large bending index has a long linear part and is not bent.

The vapor growth method is a method in which a hydrocarbon such as benzene and toluene is thermally decomposed in a vapor phase to synthesize a vapor-grown carbon fiber, and specific examples include a floating catalyst method and a substrate method. The vapor-grown carbon fiber can be obtained by using an organic compound such as benzene, toluene, and natural gas as a raw material and subjecting the raw material to thermal decomposition reaction at about 800 to 1,300°C together with hydrogen gas in the presence of a transition metal catalyst such as ferrocene. The carbon nanotube is preferably produced by the floating catalyst method.

The substrate method is a method in which a carbon source is supplied to a catalyst fixed to a substrate in advance to react the carbon source with the catalyst, the method including a fluidized catalyst method and a zeolite catalyst-supporting method. The floating catalyst method is a method of supplying a catalyst and a carbon source into a reactor at the same time. The substrate method has the advantage of easily controlling reaction conditions such as temperature and time, and the floating catalyst method has the advantage that the synthetic reaction can be continuously performed by supplying a carbon source and a catalyst to a reaction field at the same time. The floating catalyst method further has the advantage, as compared with the substrate method, that since the resulting fiber tends to be linear in shape, high conductivity can be easily developed when the fiber is mixed with a resin.

The carbon nanotube produced by the above methods may be dispersed in the resin component without pretreatment or may be dispersed in the resin component after pretreatment. Examples of the pretreatment include a method of treating the carbon nanotube at a low temperature (800 to 1,500°C) in an inert gas atmosphere and a method of subjecting the carbon nanotube to graphitization at a high temperature (2,000 to 3,000°C) in an inert gas atmosphere. The method of subjecting the carbon nanotube to graphitization at a high temperature (2,000 to 3,000°C) is preferred from the point of view of improving the conductivity of the conductive resin composition.

The carbon nanotube may be subjected to acid treatment with nitric acid, sulfuric acid, hydrochloric acid, or a mixed acid thereof or may be subjected to surface oxidation treatment by heating in the presence of air, from the point of view of improving wettability to a resin and dispersibility to a resin.

The carbon nanotube may be subjected to heat treatment in the presence of a graphitizing catalyst to improve the crystallinity (graphitization degree) for the purpose of improving conductivity. Examples of the method of heat treatment with a graphitizing catalyst include a method of allowing a graphitizing catalyst to act on a carbon nanotube at 2,000 to 3,300°C in an inert gas atmosphere such as argon.

Examples of the graphitizing catalyst which can be used include boron, boron oxides (such as B₂O₂, B₂O₃, B₄O₃, and B₄O₅), boron oxoacids (such as orthoboric acid, metaboric acid, and tetraboric acid) and salts thereof, boron carbides (such as B₄C and B₆C), boron nitrides (BN), and other boron compounds. Among these compounds, boron carbides such as B₄C and B₆C and elemental boron are preferred. These graphitizing catalysts may be directly added to or mixed with a carbon nanotube, or a vapor generated by heating the graphitizing catalyst may be contacted with the carbon nanotube without contacting the graphitizing catalyst directly with the carbon nanotube. The amount of the graphitizing catalyst added is preferably 1 to 20 parts by mass, more preferably 1 to 10 parts by mass, further preferably 1 to 8 parts by mass, based on 100 parts by mass of the carbon nanotube. The carbon nanotube which has been subjected to heat treatment with the graphitizing catalyst is doped with boron and has an improved conformability with a dispersion medium and a resin, improving dispersibility.

The carbon nanotube is preferably a carbon nanotube that has been subjected to heat treatment with the graphitizing catalyst.

### (Other Carbon Components)

The conductive resin composition may comprise carbon compounds different from the flaky graphite containing boron (C) and a carbon nanotube (D) as other carbon components. The content of other carbon components is preferably 8 parts by mass or less based on 100 parts by mass of the resin component.

When the conductive resin composition comprises other carbon components, the total content of the carbon components is preferably 10 to 70 parts by mass, more preferably 30 to 65 parts by mass, further preferably 35 to 60 parts by mass, based on 100 parts by mass of the resin component. When the content of the carbon components based on the resin component is within the above range, the conductivity of the conductive resin composition can be further improved, and the filler can be sufficiently dispersed since the viscosity of the conductive coating material or the like is not excessively high.

### <Other Components>

The conductive resin composition may comprise various additives, such as a coupling agent, a leveling agent, a dispersing agent, a rheology controlling agent, a defoaming agent, an antioxidant, a drying regulator, a surfactant, and a plasticizer, in addition to the resin component and the carbon component, and the curing catalyst and curing agent as needed.

The conductive resin composition preferably comprises a solvent.

Any solvent can be used as the solvent without particular limitation as long as it can dissolve the resin component. Examples of the solvent which can be used include one or two or more selected from the group consisting of alcohol compounds, such as methanol, butanol, benzyl alcohol, and diacetone alcohol; ketone compounds, such as methyl ethyl ketone and cyclohexanone; ether compounds, such as dioxane and tetrahydrofuran; glycol ester compounds, such as propylene glycol monomethyl ether acetate, ethylene glycol monoethyl ether acetate, and diethylene glycol monoethyl ether acetate; glycol ether compounds, such as ethylene glycol monomethyl ether, ethylene glycol monoethyl ether, propylene glycol monomethyl ether, butoxy ethanol, and diethylene glycol monobutyl ether; and amide compounds, such as N-methyl pyrrolidone, N,N-dimethylformamide, and N,N-dimethylacetamide. Among these solvents, diethylene glycol monoethyl ether acetate, propylene glycol monomethyl ether, butoxy ethanol, and diethylene glycol monobutyl ether are preferred from the point of view of the solubility of the resin component and drying speed when the composition is applied.

The amount of the solvent used is not particularly limited, and the solvent can be suitably used in an amount within the range where a uniform composition can be prepared by mixing and kneading in consideration of the viscosity of the resin component, the mixing ratio of the resin component to the carbon component, and the like. Specific amount of the solvent is preferably 10 to 1000 parts by mass, more preferably 50 to 500 parts by mass, further preferably 100 to 300 parts by mass, based on 100 parts by mass of the resin component.

### <Method for Producing Conductive Resin Composition>

The conductive resin composition can be produced, for example, by adding a carbon component, a curing catalyst, a curing agent, and other components to a resin component comprising polyvinyl acetal (A) and optionally a curable resin (B) and mixing and kneading these components. Known mixing equipment can be used for the mixing. The order of blending each component is not particularly limited.

In an example of the methods for producing the conductive resin composition, the conductive resin composition can be produced by dissolving a resin component in a solvent using a high speed stirrer to produce varnish, and, in the case of a large lot, blending the varnish with a carbon component, subjecting the blend to premixing in a tank mixer, continuously mixing and grinding the premix in a sand mill, and adjusting viscosity. Further, in the case of a small lot, the conductive resin composition can be produced, for example, by directly placing a carbon component and the above varnish in an attritor, mixing and grinding these materials, and adjusting viscosity. Note that a container-driving medium mill, such as a ball mill, and a three-roll mill may also be used instead of a medium-stirring mill such as the sand mill (circulation tank-type mill) and the attritor (mixing tank-type mill).

### [Conductive Coating Material, Conductive Adhesive]

The conductive resin composition can be widely used in applications requiring conductivity, and especially, it is preferably used as a conductive coating material and a conductive adhesive. The conductive coating material and the conductive adhesive may be the conductive resin composition itself or may additionally contain a known component used for the conductive coating material and the conductive adhesive. However, it is preferred that the conductive coating material and the conductive adhesive do not contain a metallic material from the point of view of the reliability and the production cost of the conductive coating material and the conductive adhesive.

Examples of the methods for coating a base material with the conductive coating material and the conductive adhesive include a screen printing method, a dispenser method, a dipping method, a transfer method, an applicator method, a brush coating method, and a spray method. Further, examples of the methods for coating a substrate or an electronic device include a screen printing method, a dipping method, and a transfer method. Depending on each of the coating methods described above, the ratio of the conductive resin composition to the solvent is preferably changed to adjust the viscosity and the like of the conductive coating material and the conductive adhesive.

### Examples

The present invention will be described further in detail below with reference to Examples, but the present invention is not limited at all by these Examples.

### [Examples 1 to 6]

The untreated flaky graphites and boron compounds shown in Table 1 were each mixed, and the mixture was put in a graphite crucible and heat-treated at a temperature shown in Table 1 for 30 minutes in an argon atmosphere in a resistance heating graphitizing furnace (manufactured by Kurata Giken Co., Ltd.) to thereby produce flaky graphites containing boron (hereinafter also referred to as "boron-doped flaky graphites") (c-1) to (c-6) of Examples 1 to 6. Note that the following were used as the untreated flaky graphites serving as raw materials (all manufactured by XG Science, Inc.). The following average thickness is a value calculated from the specific surface area in the nitrogen adsorption BET method using a theoretical density of graphite, assuming graphite to be a plate and ignoring the edges.
"xGnP-M-5" average thickness: 6 nm, average plate diameter: 5 µm, a raw material for (c-1) and (c-6)
"xGnP-M-25" average thickness: 6 nm, average plate diameter: 25 µm, a raw material for (c-2)
"xGnP-H-5" average thickness: 15 nm, average plate diameter: 5 µm, a raw material for (c-3)
"xGnP-H-25" average thickness: 15 nm, average plate diameter: 25 µm, a raw material for (c-4)
"xGnP-C-300" average thickness: 2 nm, average plate diameter: 2 µm, a raw material for (c-5)

### [Comparative Example 1]

Untreated flaky graphite "xGnP-M-25" was used as (y-1).

### [Comparative Example 2]

Untreated flaky graphite "xGnP-H-25" was used as (y-2).

### [Comparative Example 3]

Boron carbide (B₄C) in an amount of 4 parts by mass was added, as a raw material, to 100 parts by mass of graphite powder (average thickness: 250 nm, average diameter: 15 µm), which was followed by mixing. The mixture was put in a graphite crucible and heat-treated at 2800°C for 30 minutes in an argon atmosphere using a resistance heating graphitizing furnace (manufactured by Kurata Giken Co., Ltd.) to obtain boron-doped graphite (y-3).

### [Comparative Example 4]

Boric acid (H₃BO₃) in an amount of 18 parts by mass was added, as a raw material, to 100 parts by mass of untreated graphite "Graphite Powder 40798" (manufactured by Alfa Aesar, 325 mesh, average diameter: 30 µm) having an average thickness of 1.5 µm, which was followed by mixing. The mixture was put in a graphite crucible and heat-treated at 2800°C for 30 minutes in an argon atmosphere using a resistance heating graphitizing furnace (manufactured by Kurata Giken Co., Ltd.) to obtain boron-doped graphite (y-4).

Note that since "Graphite Powder 40798" has an excessively large average thickness, it is difficult to calculate average thickness by a method of determining average thickness from the BET specific surface area described above. Therefore, the average thickness was obtained by measuring the maximum diameter of each of 100 samples of the graphite selected at random with a scanning electron microscope and determining the arithmetic average of these measured values.

The flaky graphites produced in Examples 1 to 6 and Comparative Examples 1 to 4 were subjected to the following evaluations. Note that "-" in Table 1 represents unmeasured or unused.

### [Boron Content]

The content of boron was determined by subjecting a sample pretreated according to JIS R 7223 to ICP-atomic emission spectrometry. Note that the detection limit is 5 ppm.

### [Average Interplanar Spacing d₀₀₂]

The average interplanar spacing d₀₀₂ was measured by the method described above using X-ray diffractometer (Model RINT-2200V PC) manufactured by Rigaku Corporation. The results are shown in Table 1.

Table 1 shows that a flaky graphite containing boron having a high graphitization degree and small d₀₀₂ is obtained by heat-treating a flaky graphite serving as a raw material in the presence of a boron compound.

### [Laser Raman Peak Intensity Ratio [D/G]]

The intensity ratio [D/G] was measured by the method described above using a laser Raman microspectrometer (laser wavelength: 785 nm) manufactured by Renishaw plc. The results are shown in Table 1.

Table 1 shows that a part of carbon atoms in the crystal of graphite is replaced by a boron atom to increase the [D/G] by heat-treating a flaky graphite serving as a raw material in the presence of a boron compound.

### [Powder Resistance]

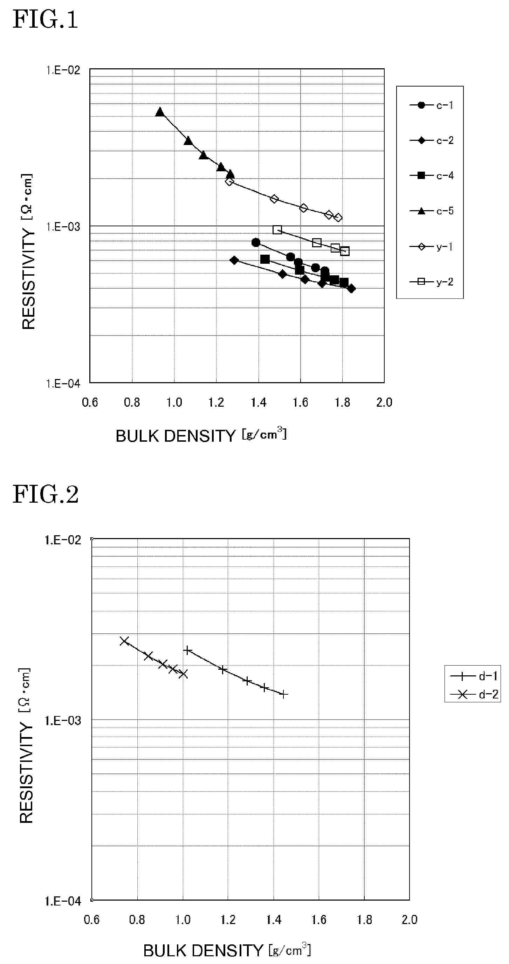

The flaky graphites (c-1), (c-2), (c-4), (c-5), (y-1), and (y-2) were each precisely weighed in an amount of 0.2 g and measured for the resistivity at a given bulk density with a powder resistance measurement system (MCP-PD51, manufactured by Mitsubishi Chemical Analytech Co., Ltd.). The results are shown in Fig. 1. Further, the powder resistance at a bulk density of 1.7 g/cm³ determined from Fig. 1 is shown in Table 1.

Table 1 shows that the powder resistance is reduced by the heat treatment in the presence of a boron compound. Note that the flaky graphite used as a raw material when (c-1) was produced had an average interplanar spacing d₀₀₂ of 0.3356 nm and a Raman peak intensity ratio [D/G] of 0.5. The flaky graphite ((y-2)) used as a raw material when (c-4) was produced had a Raman peak intensity ratio [D/G] of 0.6.

**Table 1**

| | Untreated flaky graphite (raw material) | | | | Boron compound | | Heat treatment temperature (°C) | Flaky graphite after treatment | | | | | |
|---|---|---|---|---|---|---|---|---|---|---|---|---|---|
| | Type | Average thickness (nm) | Average plate diameter (µm) | Powder resistance (Ω·cm)^{*1} | Type | Amount added ^{*2} (parts by mass) | | Average thickness (nm) | Average plate diameter (µm) | Boron content (% by mass) | d₀₀₂ (nm) | D/G | Powder resistance (Ω·cm)^{*1} |
| Example 1 (c-1) | xGnP-M-5 | 6 | 5 | - | B₄C | 4 | 2800 | 70 | 5 | 2.7 | 0.3349 | 1.0 | 5×10⁻⁴ |
| Example 2 (c-2) | xGnP-M-25 | 6 | 25 | 1×10⁻³ | B₄C | 4 | 2800 | 70 | 25 | 2.8 | 0.3348 | 0.9 | 4×10⁻⁴ |
| Example 3 (c-3) | xGnP-H-5 | 15 | 5 | - | B₄C | 4 | 2800 | 90 | 5 | 2.5 | 0.3348 | 1.0 | 5×10⁻⁴ |
| Example 4 (c-4) | xGnP-H-25 | 15 | 25 | 8×10⁻⁴ | B₄C | 4 | 2800 | 90 | 25 | 2.6 | 0.3346 | 1.0 | 5×10⁻⁴ |
| Example 5 (c-5) | xGnP-C300 | 2 | 2 | - | B₄C | 4 | 2800 | 19 | 2 | 3.0 | 0.3355 | 1.1 | - |
| Example 6 (c-6) | xGnP-M-5 | 6 | 5 | - | H₃BO₃ | 18 | 2000 | 50 | 5 | 3.3 | 0.3351 | 0.9 | 5×10⁻⁴ |
| Comparative Example 1 (y-1) | xGnP-M-25 | 6 | 25 | 1×10⁻³ | - | - | - | - | - | Below detection limit | - | - | - |
| Comparative Example 2 (y-2) | xGnP-H-25 | 15 | 25 | 8×10⁻⁴ | - | - | - | - | - | Below detection limit | - | - | - |
| Comparative Example 3 (y-3) | Graphite powder | 250 | 15 | 1×10⁻³ | B₄C | 4 | 2800 | 180 | 15 | 2.2 | 0.3346 | 1.0 | 6×10⁻⁴ |
| Comparative Example 4 (y-4) | Graphite Powder 40798 | 1500 | 30 | - | H₃BO₃ | 18 | 2800 | 1500 | 30 | 2.2 | 0.3346 | 1.0 | - |

| | | | | | | | | | | | | | |
|---|---|---|---|---|---|---|---|---|---|---|---|---|---|
| *1: Powder resistance at a bulk density of 1.7 g/cm³ *2: Amount added based on 100 parts by mass of untreated flaky graphite | | | | | | | | | | | | | |

### [Examples 7 to 23, Comparative Examples 5 to 9]

The flaky graphites obtained in Examples 1 to 6 and Comparative Examples 1 to 4 were used to prepare conductive resin compositions, which were subjected to various evaluations to be described below. Note that the materials used for the preparation of conductive resin compositions in addition to the flaky graphites obtained in Examples 1 to 6 and Comparative Examples 1 to 4 are as follows.

### <Polyvinyl Acetal (A)>

(a-1): Polyvinyl butyral manufactured by Sekisui Chemical Co., Ltd., S-LEC "BM-2"
   butyralization degree: 68 mol%
(a-2): Polyvinyl butyral manufactured by Sekisui Chemical Co., Ltd., S-LEC "BL-2H"
   butyralization degree: 70 mol%

### <Curable Resin (B)>

(b-1): Shonol "BKS-3823A", manufactured by Showa Denko K.K.
   resol-type phenolic resin, weight average molecular weight: 6,500, non-volatile matter content: 44% by mass (containing 32% by mass of methanol, 20% by mass of n-butanol, and 4% by mass of benzyl alcohol as solvents)
(b-2): Shonol "BRN-595", manufactured by Showa Denko K.K.
   novolac-type phenolic resin, weight average molecular weight: 16,000 (b-3): Epotohto YH-434L (epoxy resin), manufactured by Nippon Steel Chemical Co., Ltd.
   N,N,N',N'-tetraglycidyl-4,4'-diaminodiphenylmethane

Note that "Shodex (registered trademark) GPC System-21 (column: KF-802, KF-803, and KF-805)" manufactured by Showa Denko K.K. was used for the measurement of the weight average molecular weight of (b-1) and (b-2). The measurement conditions include a column temperature of 40°C, tetrahydrofuran as an eluent, and a dissolution rate of 1 ml/min.

### <Carbon Nanotube (D)>

(d-1)
(d-1) is a catalyst-graphitized vapor-grown carbon fiber produced according to the following procedures.

That is, an untreated vapor-grown carbon fiber "VGCF (registered trademark)" (manufactured by Showa Denko K.K.) was heat-treated at 1300°C, and the heat-treated vapor-grown carbon fiber was used as a raw material. A graphitizing catalyst (B₄C) was added in an amount of 4 parts by mass to 100 parts by mass of the heat-treated vapor-grown carbon fiber, which was followed by mixing. The mixture was put in a graphite crucible and subjected to graphitization at 2800°C for 30 minutes using a resistance heating graphitizing furnace (manufactured by Kurata Giken Co., Ltd.).
Average fiber diameter: 150 nm
Average fiber length: 8 µm
Aspect ratio: 53
Bending index : 9

(d-2)
(d-2) is a catalyst-graphitized multi-walled carbon nanotube produced according to the following procedures.

That is, the furnace temperature of a vertical tubular heating furnace (inner diameter: 60 mm, length: 1000 mm) was raised to and maintained at 1300°C, and therein was placed toluene containing 3% mass of ferrocene and 1.5% by mass of thiophene (liquid raw material), which was irradiated with ultrasonic wave and fed with hydrogen gas as a carrier gas. The flow rate of the hydrogen gas was set to 10 L/min, and the feed rate of the liquid raw material was set to 1.5 g/min. Under such conditions, ferrocene is thermally decomposed to form iron particles, which serve as a seed for growing a multi-walled carbon nanotube using the carbon derived from the thermal decomposition of toluene. The as-grown multi-walled carbon nanotube obtained in this way was heat-treated at 1000°C in an argon atmosphere, and the heat-treated multi-walled carbon nanotube was used as a raw material. B₄C was added in an amount of 4 parts by mass to 100 parts by mass of the heat-treated multi-walled carbon nanotube, which was followed by mixing. The mixture was put in a graphite crucible and subjected to graphitization at 2800°C for 30 minutes in an argon atmosphere using a resistance heating graphitizing furnace (manufactured by Kurata Giken Co., Ltd.).
Average fiber diameter: 50 nm
Average fiber length: 8 µm
Aspect ratio: 160
Bending index: 11

Note that the shape of the carbon nanotube (D) was determined by the following method.

The average fiber diameter of the carbon nanotube was determined by selecting 200 samples of carbon nanotubes at random using a scanning electron microscope (SEM), measuring the fiber diameter and the fiber length of each sample, and calculating the arithmetical average. The aspect ratio was calculated from the average fiber diameter and the average fiber length. The bending index was determined by selecting 200 samples of carbon nanotubes at random using a scanning electron microscope (SEM), measuring Lx/D from the length of the linear part which is not bent (Lx) and the diameter (D), and calculating the arithmetical average.

Further, the powder resistance value of the carbon nanotube (D) was measured in the same manner as in measuring the powder resistance value of the flaky graphite described above. The results of the measurement are shown in Fig. 2.

### <Solvent>

(e-1) Hisolve MP (propylene glycol monomethyl ether) Toho Chemical Industry Co., Ltd.
(e-2) methanol, derived from Shonol "BKS-3823A"
(e-3) n-butanol, derived from Shonol "BKS-3823A"
(e-4) benzyl alcohol, derived from Shonol "BKS-3823A"

### <Curing Catalyst>

(f-1): CUREZOLC11-CN
   1-cyanoethyl-2-undecylimidazole
   Shikoku Chemicals Corporation

### <Preparation of Conductive Resin Composition>

The compositions shown in Tables 2 to 4 were prepared as follows. Hysorb MP was added to a resin component to prepare a varnish having a non-volatile matter content of 20 to 40% by mass. Then, the varnish, CUREZOL C11-CN, and a carbon component were put in a container so that the composition of the non-volatile matter would be as shown in Tables 2 to 4.

Note that the amount of the resin component blended shown in Tables 2 to 4 is not the amount as a varnish but the amount in terms of non-volatile matter.

The container containing each component was set to a planetary centrifugal mixer "THINKY MIXER ARE-300" (manufactured by THINKY CORPORATION), and dispersion (mixing + deaeration) treatment was performed eight times in total under the conditions of mixing: 2000 rpm x 30 seconds and deaeration: 2200 rpm × 30 seconds to thereby prepare the conductive resin compositions in Examples and Comparative Examples. Note that when the viscosity excessively increased in the process of dispersion treatment, Hysorb MP as a solvent was suitably added.

The amount of the solvents blended as shown in Tables 2 to 4 is the total of the amount of the solvent containing a resin component serving as a raw material as it is and the amount of Hysorb MP added in the process of preparation of a varnish and a conductive resin composition.

### <Preparation and Evaluation of Cured Coating Film>

The resulting conductive resin compositions were used for the preparation of cured coating films in the following manner, and the physical properties thereof were evaluated.

### (Conductivity Test)

A conductive resin composition was applied to a glass plate using an applicator having a gap of 200 µm, and the resulting coating film was subjected to drying by heating at 80°C for 30 minutes and then further heated at 200°C for one hour to obtain a cured coating film.

The resulting cured coating film was measured for conductivity by a four-probe method, using "Loresta EP" (MCP-T360: manufactured by Dia Instruments Co., Ltd.) and an ASP probe. Note that in this test, the cured coating film was rated as Pass (P) when it had a resistivity of 1×10⁻¹ Ω·cm or less and rated as Fail (F) when it did not have this resistivity.

### (Adhesion Test)

A cured coating film prepared in the same manner as in the conductivity test was used. The surface of the cured coating film was cut in a grid pattern to form 100 cut areas each having a size of 1 mm². A cellophane tape was stuck to the 100 cut areas. Then, the cellophane tape was peeled off, and the number of cut areas that were not peeled off from the base material without adhering to the cellophane tape was measured. Note that in this test, the cured coating film was rated as Pass when the number of cut areas that were not peeled off from the base material was 95 or more.

### (Heat Resistance Test)

Two copper/copper (C100P) base materials each having a size of 14 mm in width x 28 mm in length × 9 mm in thickness were prepared, and the bonding surfaces were each subjected to #240 polishing treatment (finished by polishing to P240 according to JIS R6010). The two base materials were each coated with a conductive resin composition so that the resulting coating film might have a thickness of 100 µm, followed by drying at 80°C for 30 minutes. Then, the two base materials were stacked such that the coated surfaces thereof might overlie each other and bonded together at 200°C for 30 minutes by applying a load of 2 kg/cm². The two copper base materials bonded together were measured for compression shear strength with a CAVER PRESS MODEL-C in an atmosphere of 200°C. In the evaluation, the cured coating film was rated as Pass (P) when it had a strength of 5 MPa or more and rated as Fail (F) when it did not have this strength.

### (Water Resistance Test)

A conductive resin composition was applied to a glass plate so that the resulting coating film might have a thickness of 100 µm, and the resulting coating film was subjected to drying by heating at 80°C for 30 minutes and then further heated at 200°C for 30 minutes to obtain a cured coating film. The cured coating film was immersed in distilled water at 100°C for 96 hours and then checked for the presence or absence of discoloration, deformation (such as blistering and peeling), and an eluted substance. The cured coating film was rated as Pass (P) when discoloration, deformation (such as blistering and peeling), and an eluted substance were absent and rated as Fail (F) when these defects were present.

### (Coating Film Appearance Test)

The appearance of the cured coating film prepared in the same manner as in the conductive test was visually observed. The cured coating film was rated as Pass (P) when defects such as cracks, pores, blisters, and peeling were not observed and rated as Fail (F) when these defects were observed.

### (Overall Evaluation)

The cured coating film was rated as (P) when it met the criteria for passing in all of the conductivity test, adhesion test, heat resistance test, water resistance test, and coating film appearance test and rated as (F) when it did not meet these tests.

Each of the test results is shown in Tables 2 to 4.

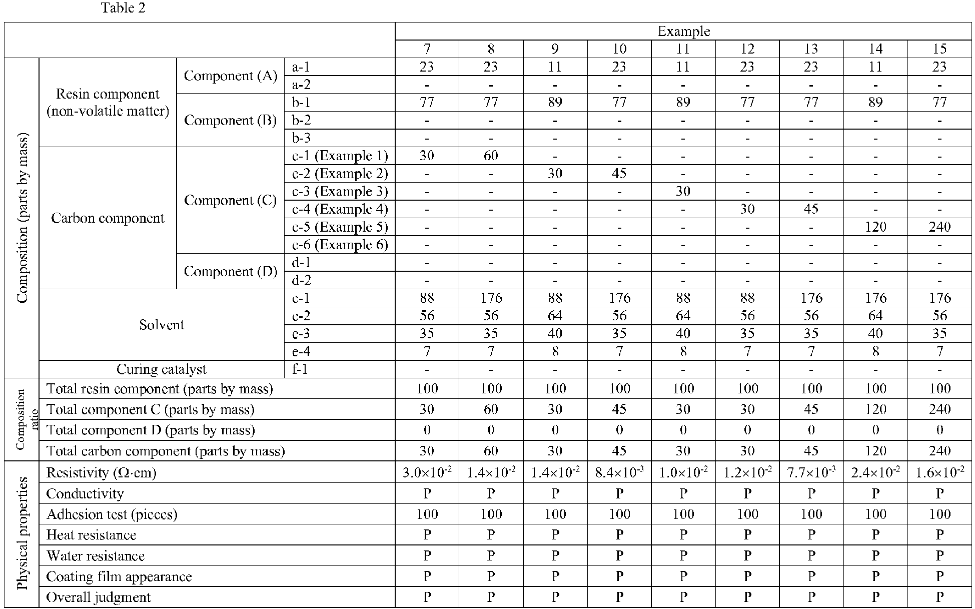

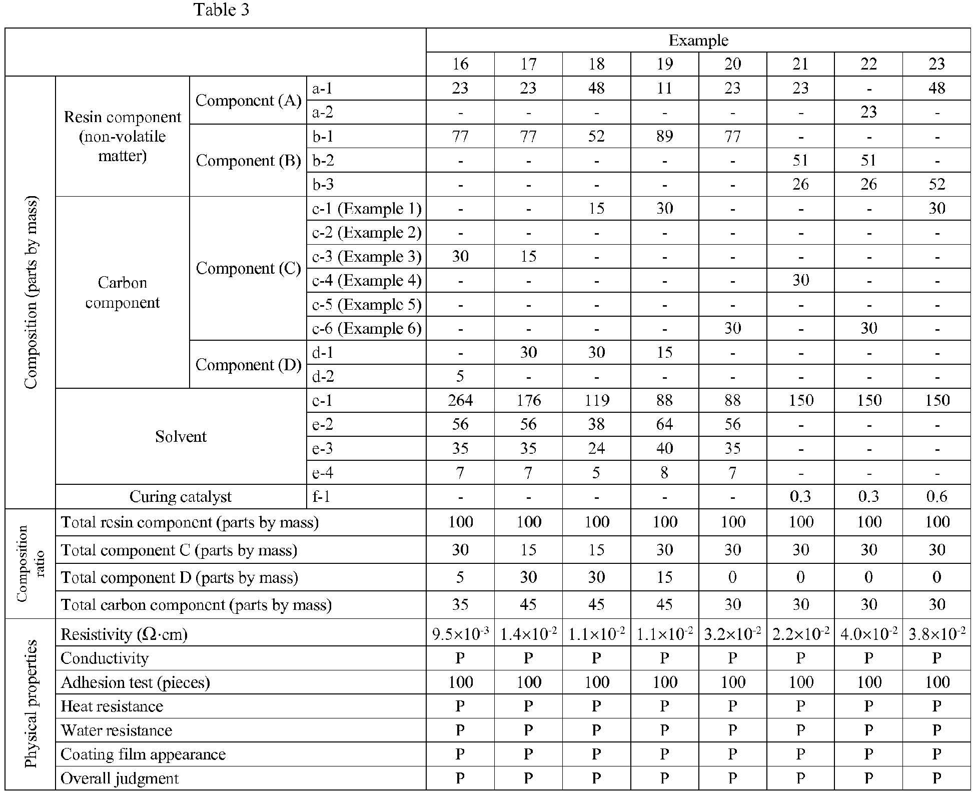

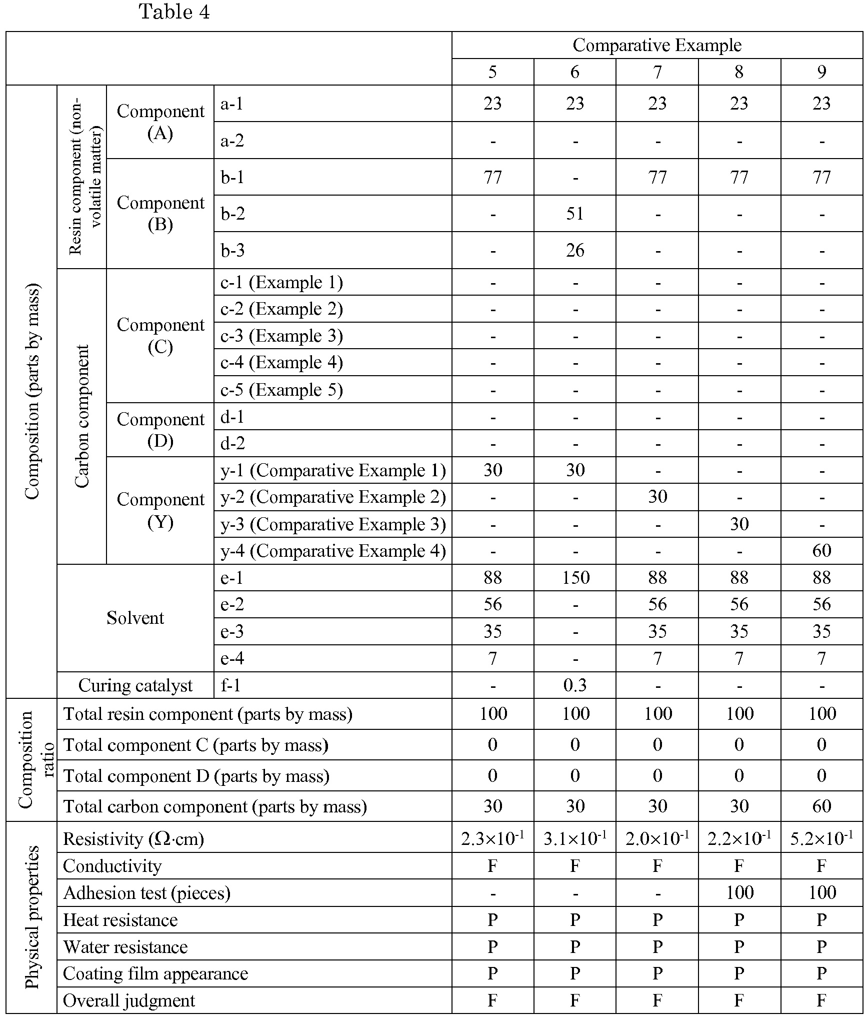

The results of Tables 2 to 4 show that when a flaky graphite containing boron which is heat-treated in the presence of a boron compound is used, satisfactory characteristics are developed, and particularly, resistivity is reduced. The results of Examples show that since the conductive resin composition of the present invention is excellent in conductivity, heat resistance, water resistance, and adhesion with a base material, it is suitable as a conductive coating material and a conductive adhesive.

In Comparative Examples 5 to 7, resistivity is higher than that in Examples since a flaky graphite which has not been heat-treated in the presence of boron is used. In Comparative Examples 8 and 9, resistivity is higher than that in Examples since graphite having a large thickness which has been heat-treated in the presence of boron is used.

### Industrial Applicability

The conductive resin composition of the present invention can be suitably used as a conductive coating material and a conductive adhesive since it is excellent in conductivity, heat resistance, water resistance, and adhesion with a base material. The conductive coating material and the conductive adhesive of the present invention can be suitably used for industrial products such as integrated circuits, electronic components, optical components, and various control parts, wiring materials and connecting materials with each equipment, antistatic materials for various devices, electromagnetic wave shields, electrostatic coating, and the like. The conductive coating material and the conductive adhesive of the present invention can be suitably used for printed wiring circuits and the like for household appliances, industrial use, vehicles, communication information, aviation and shipping, space, clocks, photographs, toys, and the like.

## Claims

1. A flaky graphite containing boron, the flaky graphite containing boron having an average thickness of 100 nm or less and an average plate diameter d_{c} of 0.01 to 100 µm.

2. The flaky graphite containing boron according to claim 1, the flaky graphite containing boron having an average thickness of 100 nm or less and an average plate diameter d_{c} of 1 to 100 µm and comprising two or more layers of graphene sheets, wherein an average interplanar spacing d₀₀₂ by wide-angle X-ray diffraction is 0.337 nm or less, and an intensity ratio [D/G] of D-band to G-band in a laser-Raman spectrum is 0.8 to 1.5.

3. A method for producing a flaky graphite containing boron, the method comprising heat-treating a flaky graphite having an average thickness of 100 nm or less and an average plate diameter d_{c} of 0.01 to 100 µm in the presence of one or two or more selected from boron and a boron compound.

4. A conductive resin composition comprising a resin component and a carbon component comprising at least the flaky graphite containing boron according to claim 1 or 2, wherein the content of the carbon component based on 100 parts by mass of the resin component is 5 to 4000 parts by mass.

5. The conductive resin composition according to claim 4, wherein the resin component comprises 10 to 100% by mass of polyvinyl acetal.

6. The conductive resin composition according to claim 5, wherein the polyvinyl acetal is polyvinyl butyral.

7. The conductive resin composition according to any one of claims 4 to 6, further comprising a solvent.

8. The conductive resin composition according to any one of claims 4 to 7, wherein the resin component further comprises a curable resin.

9. The conductive resin composition according to claim 8, wherein the curable resin is one or two or more selected from a phenolic resin and an epoxy resin.

10. The conductive resin composition according to any one of claims 4 to 9, wherein the content of the carbon component based on 100 parts by mass of the resin component is 5 to 1000 parts by mass.

11. The conductive resin composition according to any one of claims 4 to 10, wherein the carbon component further comprises a carbon nanotube.

12. A conductive coating material comprising the conductive resin composition according to any one of claims 4 to 11.

13. A conductive adhesive comprising the conductive resin composition according to any one of claims 4 to 11.
